# EUROPÄISCHE PATENTSCHRIFT

(11) **EP 1 779 496 B1**
(45) Veröffentlichungstag und Bekanntmachung des Hinweises auf die Patenterteilung: **21.02.2018**
(21) Anmeldenummer: 05777691.6
(22) Anmeldetag: 04.08.2005
(51) Int. Cl.: H01R 29/00, H02K 5/10, H02K 5/22, H02K 11/33, H01R 4/30, H01R 13/115, H01R 13/428

(54) **ANSCHLUSSVORRICHTUNG FÜR EINE ELEKTRISCHE MASCHINE**
CONNECTION DEVICE FOR AN ELECTRICAL MACHINE
DISPOSITIF DE RACCORDEMENT D'UNE MACHINE ELECTRIQUE

(30) Priorität: 16.08.2004 DE 102004039682
(43) Veröffentlichungstag der Anmeldung: 02.05.2007
(73) Patentinhaber: Siemens Aktiengesellschaft, 80333 München (DE)
(72) Erfinder: HANDWERKER, Michael, 97653 Bischofsheim (DE)
(86) Internationale Anmeldenummer: PCT/EP2005/053856
(87) Internationale Veröffentlichungsnummer: WO 2006/018396

(56) Entgegenhaltungen:
- EP-A- 0 351 272
- FR-A- 2 783 648
- US-A- 3 139 492
- US-A- 3 210 578
- US-A- 5 408 154

## Beschreibung

Die vorliegende Erfindung betrifft eine Anschlussvorrichtung für eine elektrische Maschine und insbesondere für Elektromotoren.

Für die unterschiedlichen Einsatzarten von Elektromotoren ergeben sich auch unterschiedliche Anforderungen an die Ausführung des elektrischen Anschlusssystems. Jedes der verschiedenen Anschlusssysteme benötigt jeweils völlig andere Anschlusskomponenten. Um die Anschlussart zu wechseln ist üblicherweise ein hoher Aufwand an Varianz oder Adapterteilen erforderlich. Dies führt oft zu stark erhöhten Kosten und erfordert in vielen Fällen zusätzlich mehr Einbauraum. Somit ist in vielen Einsatzfällen die ideale Anschlussart aus technischen und wirtschaftlichen Gründen nicht verwendbar.

Typischerweise werden Motoren heutzutage beispielsweise über Klemmbretter angeschlossen, bei denen die motorseitigen und die äußeren Anschlusskontakte jeweils angeschraubt werden. Entsprechend einer anderen Anschlussvariante werden die Energie- und Steuerleitungen des Motors in einen externen Schaltschrank geführt, wenn dies beispielsweise durch Platzmangel geboten ist.

Da die unterschiedlichen Motortypen in aller Regel jeweils verschiedene Energie- und Steuerleitungen besitzen, ergibt sich für die Elektromotoren eine hohe, sogenannte innere Varianz. Des Weiteren resultiert aus der Vielzahl an Möglichkeiten äußerer Anschlüsse eine hohe äußere Varianz. Aus der Kombination der inneren Varianzen und der äußeren Varianzen ergibt sich eine sehr hohe Anzahl an möglichen Anschlusssystemen. Dadurch erhöht sich nicht nur der logistische Aufwand, sondern auch der Montageaufwand für die Anschlusssysteme.

Aus der Druckschrift DE 196 03 868 C1 ist eine Klemmplatte für einen Elektromotor bekannt, die Anschlussstifte für Leitungsschuhe, Brücken oder Muttern aufnimmt. Die Klemmplatte wird in einem Anschlussgehäuse des Elektromotors aufgenommen.

Darüber hinaus zeigt die Druckschrift EP 0 829 944 A2 einen Anschluss für einen Elektromotor einer Waschmaschine. Ein Steckverbinder ist an der Wicklung des Motors befestigt. Ein Stecker mit mehreren voneinander isolierten Kontakten kann in den Steckverbinder eingesteckt werden. Die Kontakte können dabei als Flachkontakte ausgeführt sein.

Ferner ist aus der Druckschrift DE 1 488 954 B ein Anschlusskasten für elektrische Maschinen bekannt, der mehrere Öffnungen für Energieleitungen und Steuerleitungen aufweist.

Schließlich beschreibt die Druckschrift DE 1 913 399 U einen kubusförmigen Anschlusskasten für einen Elektromotor, wobei fünf Wände des Anschlusskastens mit untereinander gleichen Öffnungen versehen sind, die nach Wunsch durch eine Kabeleinführung, ein besonderes Schaltorgan oder einen Deckel abschließbar sind.

Aus dem US Patent 3,139,492 ist ein zweiteiliger Steckanschluss bekannt. Ein unterer Sockel umfasst fest eingebettete Kontakte, die den Sockel durchdringen. Auf den Sockel aufsteckbar ist in vier jeweils um 90° gedrehten Positionen ein weiterer Stecker.

Aus dem US Patent 3,210,578 ist eine zweiteilige Steckverbindung zum elektrischen Anschließen eines Motors bekannt. Ein Zwischenelement umfasst an zwei entgegengesetzten Seiten Steckkontakte. Mit den Steckkontakten ist das Zwischenelement in den Motor einsteckbar. Auf die Steckkontakte an der anderen Seite ist ein Endanschlusselement aufsteckbar.

Die Aufgabe der vorliegenden Erfindung besteht darin, eine Anschlussvorrichtung vorzuschlagen, die den Logistikaufwand und den Montageaufwand gegenüber bekannten Systemen reduziert.

Erfindungsgemäß wird diese Aufgabe gelöst durch eine Anschlussvorrichtung nach Anspruch 1.

Erfindungsgemäß ist somit ein universelles Anschlusskonzept für Elektromotoren, das es ermöglicht, die verschiedenen Anschlussmöglichkeiten (Klemmbrett, Stecker, herausgeführte Leitung, usw.) durch ein Baukastensystem mit möglichst wenigen Bauteilen zu realisieren, bereitgestellt. Das Stecksystem trägt nicht nur der inneren, sondern auch der äußeren Varianz an Anschlusssystemen Rechnung.

Insbesondere kann das Steckergehäuse in vier jeweils um 90° gedrehten Positionen auf den Anschlusskastensockel einer elektrischen Maschine montiert werden, wobei der Grundkörper gegenüber dem Anschlusskastensockel seine Position beibehält. Somit wird eine einschlägige VIK-Forderung erfüllt.

In den Grundkörper sind Anschlusselemente für die äußeren Kontakte eingeschnappt. Dies ermöglicht ein sehr einfaches Anschließen der äußeren Kontakte.

Die Anschlusselemente können jeweils einen Gewindebolzen zum Befestigen eines äußeren Kontakts aufweisen. Die Gewindebolzen oder Schraubklemmen stellen weit verbreitete Anschlussmöglichkeiten dar.

Die Kontakte der elektrischen Maschine sind vorteilhafterweise Flachstecker oder ähnliche Kontakte, die in den Grundkörper einschnappbar sind. Dadurch können die maschinenseitigen Kontakte komfortabel mit dem Grundkörper verbunden werden, bevor dieser in den Anschlusskastensockel der elektrischen Maschine montiert wird.

Entsprechend einer vorteilhaften Weiterbildung der erfindungsgemäßen Anschlussvorrichtung ist auf den Anschlusskastensockel einer elektrischen Maschine ein Stecker- bzw. Anschlusskastengehäuse mit einer ersten Öffnung für Energieleitungen und einer separaten zweiten Öffnung für Steuerleitungen abnehmbar montiert. Auf diese Weise können Störsignale in den Steuerleitungen, die durch die Energieleitungen hervorgerufen werden können, größtenteils vermieden werden.

Das Stecker- bzw. Anschlusskastengehäuse kann ferner auf den Anschlusskastensockel entsprechend den EMV-Richtlinien montiert sein. Somit kann die Anschlussvorrichtung auch für Umrichterbetrieb eingesetzt werden.

Die vorliegende Erfindung wird nun anhand der beigefügten Zeichnungen näher erläutert, in denen zeigen:
- FIG 1: ein Stecksystem;
- FIG 2: ein Anschlusselement für das Stecksystem von FIG 1; und
- FIG 3: eine Explosionsdarstellung einer Anschlussvorrichtung gemäß einer Ausführungsform der vorliegenden Erfindung.

Die nachfolgend näher geschilderten Ausführungsbeispiele stellen bevorzugte Ausführungsformen der vorliegenden Erfindung dar.

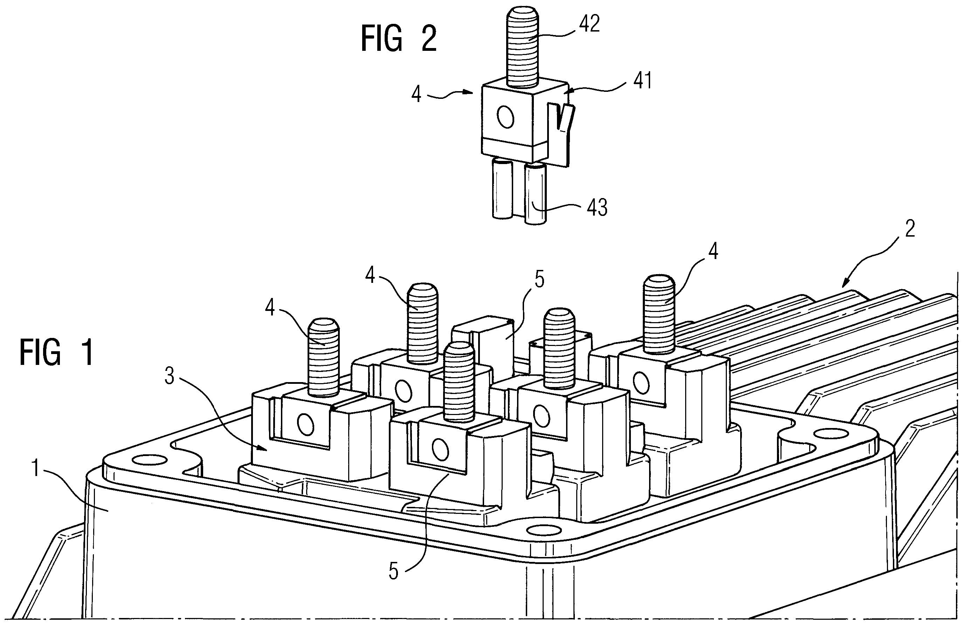

Das in FIG 1 dargestellte Anschlusssystem stellt vom Anschlussprinzip her eine Vorstufe der vorliegenden Erfindung dar und ist in einen Anschlusskastensockel 1 eines Motorgehäuses 2 eingebaut. Es besteht aus einem Klemmenbrettgrundkörper 3, in den Anschlusselemente 4 eingesteckt bzw. einsteckbar sind. Hierzu verfügt der Klemmenbrettgrundkörper 3 über entsprechende Buchsen 5.

In FIG 2 ist das Anschlusselement 4 im ausgesteckten Zustand dargestellt. Es weist einen im vorliegenden Fall würfelförmigen Mittelabschnitt 41 auf, an dem sich ein Gewindebolzen 42 befindet. In die dem Gewindebolzen 42 gegenüberliegenden Seite des Mittelabschnitts 41 ist eine Flachsteckhülse 43 befestigt.

In dem vorliegenden, typischen Fall sind für den dargestellten Motor sechs Anschlüsse vorgesehen. Der Klemmenbrettgrundkörper 3 kann aber auch jede andere beliebige Anzahl an Anschlussmöglichkeiten aufweisen.

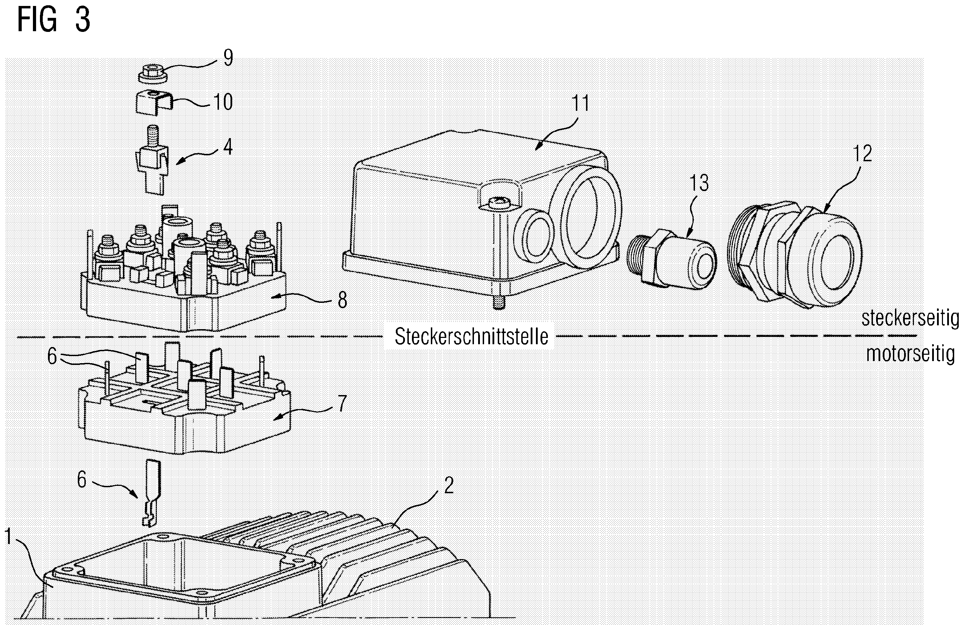

Zur Anbringung eines äußeren Kontakts (z.B. eines Kontaktschuhs) bzw. einer äußeren Leitung an das Anschlusselement 4 wird ein in FIG 2 nicht dargestellter Kontaktwinkel mit Hilfe einer ebenfalls nicht dargestellten Mutter auf den Gewindebolzen 42 geschraubt und die Leitung bzw. der Kontakt dadurch verklemmt (vgl. FIG 3).

Motorseitig erfolgt der Anschluss dadurch, dass Messerkontakte (in FIG 1 nicht dargestellt), die an den Wickeldrähten bzw. Steuerleitungen etc. des Motors befestigt sind, in die Flachsteckhülse 43 des Anschlusselements 4 eingesteckt werden. Anschließend wird der Klemmenbrettgrundkörper 3 beispielsweise mit Hilfe von zwei Schrauben in dem Anschlusskastensockel 1 befestigt.

Die beim Stand der Technik erforderliche Montage der Kabelschuhe, Kontaktwinkel und Muttern auf den Gewindebolzen der Anschlüsse entfällt somit für den Hersteller. Die Kontaktwinkel, Brücken für Motorschaltungen und Muttern für den Anschluss der Zuleitungen können in einem Beutel beim Verkauf des Motors beigelegt werden. Der Kunde braucht dann diese Elemente nicht von dem Anschlusskasten abzumontieren, um den Motor anzuschließen.

Eine Ausführungsform eines erfindungsgemäßen Anschlusssystems ist in FIG 3 dargestellt. Die motorseitigen Anschlüsse sind identisch mit denen von FIG 1. So sind auch hier die Wickeldrähte (nicht dargestellt) jeweils mit einem Messerkontakt 6 in den Anschlusskastensockel 1 des Motors 2 geführt. In den Anschlusskastensockel 1 ist ein Sockelgrundkörper 7 montierbar. In diesen Sockelgrundkörper 7 werden die Messerkontakte 6 des Motors von unten eingeschnappt, so dass sie nach oben aus dem Sockelgrundkörper 7 herausragen und als Steckerkontakte dienen. Auch hier wird der Sockelgrundkörper 7 nach dem Einschnappen der Messerkontakte 6 der Wickeldrähte und Steuerleitungen des Motors in den Anschlusskastensockel 1 montiert. Selbstverständlich können neben den Wickeldrähten und Signalleitungen auch Erdungskabel und Heizbänder und dergleichen an dem Sockelgrundkörper, der ein motorseitiges Steckerteil darstellt, angeschlossen werden. Als Alternative zu den Messerkontakten können auch beispielsweise Stiftkontakte verwendet werden.

Das motorseitige Steckerteil bzw. der Sockelgrundkörper 7 eröffnet die Möglichkeit zu einem universellen Anschlusskonzept. Der Kunde kann nämlich einen seinen individuellen Gegebenheiten entsprechenden Steckergehäusegrundkörper 8 auf den Sockelgrundkörper 7 aufstecken. Das Steckergehäuse 11 ist entsprechend einer VIK-Forderung 4x90°-drehbar. In die Oberseite des Steckergehäusegrundkörpers 8 sind entsprechend viele Anschlusselemente 4 eingesteckt, wie sie in FIG 2 dargestellt sind. Im vorliegenden Fall sind in den Steckergehäusegrundkörper 8 neun Anschlusselemente 4 einsteckbar. Auf ein derartiges Anschlusselement 4 ist mit Hilfe einer Mutter 9 ein Kontaktwinkel 10 für einen Kontaktschuh (nicht dargestellt) aufschraubbar.

Beim Einsteckvorgang des Steckergehäusegrundkörpers 8 in den Sockelgrundkörper 7 werden die Messerkontakte 6 in die Anschlusselemente 4 eingeschnappt. Auf dem Steckergehäusegrundkörper 8 kann der Benutzer wie bei der in FIG 1 dargestellten Klemmbrettlösung die gewünschte Motorschaltung (Stern, Dreieck, etc.) selbst festlegen.

Auf dem Steckergehäusegrundkörper 8 können für die äußeren Anschlüsse auch andere Anschlusselemente mit anderen gängigen Anschlussprinzipien, wie Schraub- oder Schraubklemmenanschluss, Zugfederanschluss, Direktanschluss, Crimpanschluss, Schnellanschluss über Schneidkontakte, Löt- oder Schweißanschluss, Kabelschuhanschluss, usw., vorgesehen sein.

Der Anschlusskastensockel 1 wird, wie oben bereits erwähnt, mit einem Steckergehäuse 11 verschlossen, der die 4x90°-Drehbarkeit aufweist. Die Energieanschlussleitungen werden über eine erste Verschraubung 12 und die Signalleitungen über eine zweite Verschraubung 13 in das Steckergehäuse 11 geführt. Dadurch werden Störungen der Signalleitungen durch die Energieleitungen vermieden.

Um ein möglichst breites Einsatzspektrum abzudecken, wird das Steckergehäuse 11 idealerweise aus Aluminiumdruckguss oder einem Material mit vergleichbarer Festigkeit und elektrischen Eigenschaften ausgeführt. Da das Steckergehäuse 11 ferner umlaufend auf dem Anschlusskastensockel 1 metallisch kontaktiert, ist eine niederohmige Verbindung gewährleistet. Damit entspricht das Anschlusssystem bei Einsatz von EMV-Verschraubungen für die Anschlussleitungen den EMV-Richtlinien und kann somit auch für Umrichterbetrieb eingesetzt werden.

Das Wesen der beiden oben dargestellten Ausführungsformen erfindungsgemäßer, universeller Anschlusssysteme besteht in dem Anschlusskastensockel am Motorgehäuse 2 und den idealerweise direkt an die Wickeldrähte oder Heizbänder, Kaltleiter, Thermoelemente usw. kontaktierten Anschlusselementen (z. B. Messer- oder Stiftkontakte durch Heiß-Crimpen). Ein Anschlusskastenunterteil (nicht dargestellt) mit zusätzlichem Deckel, ein Steckergehäuse 11, eine Abdeckplatte (in FIG 3 ebenfalls nicht dargestellt), beispielsweise für Verschaltungen in einem externen Schaltschrank, und dergleichen können auf dem Anschlusskastensockel 1 alle mit identischen Dicht- und Befestigungselementen montiert werden. Dabei kann bei allen Varianten die 4x90°-Drehbarkeit vorgesehen sein.

Anstelle des in FIG 3 dargestellten Sockelgrundkörpers 7 oder des in FIG 1 dargestellten Klemmenbrettgrundkörpers 3 kann auch beispielsweise eine genormte Hutschiene in dem Anschlusskastensockel 1 als Befestigungselement dienen, auf dem Anschlusselemente aufgeschraubt oder aufgeschnappt werden. Dabei sind - wie bereits angedeutet - an den Anschlusselementen die unterschiedlichsten Paarungen (motor- und kundenseitig) der Anschlussprinzipien möglich (Stecker, Schneidklemmen, Crimpen, Schweißen, Löten, Kabelschuhe, Schrauben, Klemmen usw.).

Um die universelle Einsetzbarkeit bei gleichzeitig geringer Bauteilevarianz zu ermöglichen, sind folgende Punkte von Bedeutung:
a) Die Anschlusselemente 4 am Klemmenbrettgrundkörper 3 und am Steckergehäusegrundkörper 8 sind identisch zu wählen. Auch die Kontaktbrücken für Stern- oder Dreieck-Motorschaltung sollten gleich gewählt sein. Dazu muss auch die Buchsengeometrie im Klemmbrettgrundkörper 3 und im Steckergehäusegrundkörper 8 identisch sein, wenn die Anschlusselemente 4 einsteckbar ausgeführt sind.
b) Die Flachstecker 6 bzw. anderen Kontaktelemente der elektrischen Maschine, die idealerweise direkt an die motorseitigen Wickeldrähte, Signalleitungen usw. angeschlossen sind, sollten ebenfalls identisch ausgeführt sein. Sie passen dann bei Klemmbrettausführung in das korrespondierende Anschlusselement 4 im Klemmenbrettgrundkörper 3 und bilden bei Steckerausführung die motorseitigen Steckerkontakte 6, die in den Sockelgrundkörper 7 einsteckbar sind.
c) Die Schnittstelle und die Dichtelemente zwischen dem Anschlusskastensockel 1 und dem Steckergehäuse 11 bzw. einer Abdeckplatte oder dergleichen sollte einheitlich sein.
d) Es sollte eine einheitliche Gewindeabmessung für die Anschlussverschraubungen bei Anschlusskasten-, Stecker- und Abdeckplattenausführung gegeben sein.
e) Der Grundkörper im Anschlusskastensockel 1 am Motor ist entweder als Klemmbrettgrundkörper 3 oder als Sockelgrundkörper ausgeführt.
f) Anschlusskasten, Steckergehäuse 11 bzw. Abdeckplatte sind in der Standardausführung nach den EMV-Richtlinien ausgeführt.
g) Das Stecksystem besteht lediglich aus den beiden Steckgrundkörpern 7 und 8 sowie dem Steckergehäuse 11, wobei auf eine zweite Steckergehäusehälfte verzichtet werden kann, da diese durch den Anschlusskastensockel gebildet ist.
h) Die 4x90°-Drehbarkeit der Anschlussrichtung sollte gewährleistet sein.

In vorteilhafter Weise können somit kostengünstige Standardstecker mit Verschlussstopfen z.B. an Großhändler ausgeliefert werden und der Kunde kann dann selbst mit der Art der Verschraubung zwischen Standard- oder EMV-Ausführung wählen.

## Patentansprüche

1. Anschlussvorrichtung für eine elektrische Maschine mit
- einem Sockelgrundkörper (7), der in einen Anschlusskastensockel (1) der elektrischen Maschine montierbar ist,
- einem Steckergehäusegrundkörper (8), an den äußere Kontakte anschließbar sind, wobei
- der Sockelgrundkörper (7) ein erstes Steckelement eines Stecksystems ist, auf das der Steckergehäusegrundkörper (8) als zweites Steckelement steckbar oder schnappbar ist, und wobei
- der Steckergehäusegrundkörper (8) in vier jeweils um 90° gedrehten Positionen auf den Sockelgrundkörper steckbar ist, wobei der Sockelgrundkörper (7) gegenüber dem Anschlusskastensockel (1) seine Position beibehält,
**dadurch gekennzeichnet, dass**
- der Sockelgrundkörper so ausgebildet ist, dass in den Sockelgrundkörper (7) mehrere Kontakte (6) für die elektrische Maschine von der Seite des Anschlusskastensockels (1) unten eingeschnappt sind, sie nach oben aus dem Sockelgrundkörper (7) herausragen und als Steckerkontakte für äußere Kontakte dienen, wobei
- in den Steckergehäusegrundkörper (8) Anschlusselemente (4) für die äußeren Kontakte eingeschnappt sind.

2. Anschlussvorrichtung nach Anspruch 1, wobei die Kontakte (6) der elektrischen Maschine Flachsteckkontakte sind, die in den Sockelgrundkörper (7) einschnappbar sind.

3. Anschlussvorrichtung nach Anspruch 1 oder 2, wobei die Anschlusselemente (4) jeweils einen Gewindebolzen (42) oder eine Schraubklemme zum Befestigen eines äußeren Kontakts aufweisen.

4. Elektrische Maschine mit einer Anschlussvorrichtung nach einem der vorhergehenden Ansprüche.

5. Elektrische Maschine nach Anspruch 4, wobei auf den Anschlusskastensockel (1) ein Stecker- oder Anschlusskastengehäuse (11) oder eine Abdeckplatte mit einer ersten Öffnung (12) für Energieleitungen und eine separate zweite Öffnung (13) für Steuerleitungen abnehmbar montiert ist.

## Claims

1. Connection device for an electrical machine having
- a socket base body (7), which can be fitted into a terminal box socket (1) of the electrical machine,
- a plug housing base body (8), to which external contacts can be connected,
- the socket base body (7) being a first plug-in element of a plug-in system, the plug housing base body (8) as the second plug-in element being capable of being plugged or snapped onto said first plug-in element, and
- the plug housing base body (8) being capable of being plugged onto the socket base body in four positions, which are in each case rotated through 90°, the socket base body (7) maintaining its position with respect to the terminal box socket (1),
**characterized in that**
- the socket base body is designed such that a plurality of contacts (6) for the electrical machine are snapped into the socket base body (7) from the side of the terminal box socket (1) from the bottom, they protrude upwards out of the socket base body (7) and act as plug contacts for external contacts,
- connection elements (4) for the external contacts being snapped into the plug housing base body (8).

2. Connection device according to Claim 1, the contacts (6) of the electrical machine being flat plug-in contacts, which can be snapped into the socket base body (7).

3. Connection device according to Claim 1 or 2, the connection elements (4) each having a threaded bolt (42) or a screw terminal for fixing an external contact.

4. Electrical machine having a connection device according to one of the preceding claims.

5. Electrical machine according to Claim 4, a plug housing or terminal box housing (11) or a cover plate having a first opening (12) for power lines and a separate, second opening (13) for control lines being fitted onto the terminal box socket (1) such that it can be removed.

## Revendications

1. Dispositif de connexion d'une machine électrique, comprenant
- un corps (7) de base formant embase, qui peut être monté dans une embase (1) en caisson de connexion de la machine électrique,
- un corps (8) de base formant boîtier de fiches, auquel peuvent être connectés des contacts extérieurs, dans lequel
- le corps (7) de base formant embase est un premier élément d'enfichage d'un système d'enfichage, sur lequel le corps (8) de base formant boîtier de fiches peut être enfiché ou encliqueté comme deuxième élément d'enfichage, et dans lequel
- le corps (8) de base formant boîtier de fiches peut être enfiché sur le corps de base formant embase dans quatre positions à 90° l'une de l'autre, le corps (7) de base formant embase conservant sa position par rapport à l'embase (1) en caisson de connexion,
**caractérisé en ce que**
- le corps de base formant embase est constitué de manière à ce que, dans le corps (7) de base formant embase, plusieurs contacts (6) pour la machine électrique s'encliquètent par le bas du côté de l'embase (1) en caisson de connexion, font saillie vers le haut du corps (7) de base formant embase et servent de contact à fiche pour des contacts extérieurs, dans lequel
- dans le corps (8) de base formant boîtier de fiches sont encliquetés des éléments (4) de connexion de contacts extérieurs.

2. Dispositif de connexion suivant la revendication 1, dans lequel les contacts (6) de la machine électrique sont des contacts à enficher plats, qui peuvent être encliquetés dans le corps (7) de base formant embase.

3. Dispositif de connexion suivant la revendication 1 ou 2, dans lequel les éléments (4) de connexion ont respectivement une tige (42) filetée ou une borne à vis pour la fixation d'un contact extérieur.

4. Machine électrique comprenant un dispositif de connexion suivant l'une des revendications précédentes.

5. Machine électrique suivant la revendication 4, dans laquelle, sur l'embase (1) en caisson de connexion, est monté, avec possibilité de le retirer, un boîtier (11) en caisson, à fiches ou de connexion, ou une plaque de recouvrement ayant une première ouverture (12) pour des lignes d'énergie et une deuxième ouverture (13) distincte pour des lignes de commande.
